# EUROPEAN PATENT APPLICATION

(11) **EP 4 736 638 A1**
(43) Date of publication of application: **06.05.2026**
(21) Application number: 25180518.0
(22) Date of filing: 03.06.2025
(51) Int. Cl.: A01K 15/02

(54) **DOG TRAINING DEVICE**

(30) Priority: 05.11.2024 ES 202432051 U
(71) Applicant: Saiz Juan, Miguel Antonio, 46015 Valencia (ES)
(72) Inventor: Saiz Juan, Miguel Antonio, 46015 Valencia (ES)
(74) Representative: Lozano Alonso, Jose

(57) **Abstract**

A dog training device with at least one support (1) supported by a lower structure (2), where the support comprises at least one arm (3) placed radially, wherein the arms are telescopic and are attached by removable means of attachment (8) to the support, where each of the arms comprises at one end at least one container (4) for the containment of olfactory samples.

## Description

### TECHNICAL FIELD

The present invention falls within the field of dog training and education, particularly dedicated to the field of scent and tracking detection.

And more particularly, the present invention falls within the field of dog training devices that comprise one or more scent samples to improve the dog's scent tracking and detection tasks.

### PRIOR ART

Currently, the devices used for training dogs dedicated to search and tracking tasks through smell are known. These devices comprise olfactory samples that the dog must detect or discriminate.

The most well-known devices are scent recognition wheels, used in different dog work disciplines. Among them, they are employed for sports detection, substance and explosives detection, disease detection, or professional tracking.

Document US20155264892 describes a device for training a dog to perform odor detection operations, which includes a carousel to vary the sample. It comprises four arms of equal size, for example, rectangular in shape, connected to each other through a central support, rotatably mounted on a vertically oriented rod, which allows the four arms to rotate around the rod.

Document US2019000039 describes an automated retraining wheel to train animals to detect target odors, comprising a rotating carousel and a plurality of containers with scent samples attached to the rotating carousel. It particularly describes a support mechanically coupled to the rotating carousel through a rotating shaft, which allows the carousel to rotate in relation to the support around a vertical axis of rotation. It also describes the inclusion of a drive motor for rotation.

We can also find document US2018310524, which describes a training wheel for animals, with a lower base, a rotating carousel, and a rotating shaft assembly that mechanically couples the carousel to the base.

However, these devices do not allow the disassembly of the arms for storage. Likewise, they do not allow the adjustment of the arm length. Therefore, a device or apparatus that allows the disassembly of the arms is needed.

Among these systems, we can find document US2006174843, which describes a training device for canine units of security agencies comprising six detachable arms with different locations for placing samples for dog training. In this way, each of the arms is placed on a rotating and height-adjustable structure.

Finally, we can find document US2020128791, which describes a foldable scent training wheel to train animals to detect and respond to scent material. This device comprises a base mechanically coupled to a rotating carousel that includes a plurality of arms, where the base comprises four legs that can be folded via an articulated end. It also includes fastening elements located on the rotating carousel, called arm supports, which receive and retain each of the support arms.

However, in the systems described above, the arms are disassembled using screwed joints. Likewise, it is not possible to vary their length nor to store them together with the support on which they are mounted.

### DISCLOSURE OF THE INVENTION

The dog training device that the invention proposes is, therefore, configured as a remarkable novelty within its field of application, since, according to its implementation and in a restrictive manner, the objectives indicated below are achieved, being the characterizing details that make it possible and that distinguish them, conveniently included in the final claims that accompany this description.

In view of the situation mentioned above, it is necessary to have a dog training device that allows the assembly and disassembly of the arms by means of quick fixations that do not require the use of additional tools. Likewise, it is also necessary to include some means that allow the length of the arms to be varied, so that the dimensions of the device can be adapted to the available space.

The invention described here aims to achieve the above objectives, through the use of a plurality of extendable, independent and removable telescopic arms, which are joined in a removable way on a height-adjustable rotating support; where the arms comprise at their end a container with the corresponding olfactory sample.

As they are removable, they offer the possibility of working with the desired number of arms. For example, more advanced dogs will be able to work with eight arms, while dogs that are just starting out can work with a smaller number of arms, which will increase as the animal's progress progresses.

The detachable arms, when not in use, can be placed upright on the stand by using holes with the same diameter as the arms themselves. This solves the problem of space compared to other state-of-the-art devices, since the entire set can be stored and transported while taking up as little space as possible.

To prevent the arms from falling off when they are placed in the holes in the support, they will include sleeves larger than the holes, which will act as stops (5).

The telescopic arms, as mentioned, allow the length of the arms to be adapted to the space available, making the device suitable for working anywhere, regardless of the dimensions.

To achieve ease of mounting and dismounting of the arms from the bracket, so that no additional tools are required, each arm will be held in place by two clip-type clamps of the same diameter as the tubes, providing a firm and secure hold. These clamps will be placed on the surface of the bracket.

Likewise, the support will include a handle located in its center, solving transport problems, since it allows the device to be moved from one place to another with one hand and in an ergonomic way. Preferably, the handle will be located in the center of the support, so that an equal distribution of the weight of the device is achieved, achieving comfortable transport.

The invention offers other advantages, such as placing the containers with the olfactory sample at an angle of 45° with respect to the vertical, making it easier for the dog that must sniff the sample. For example, the containers will be held in place by clamps in which they are fitted.

Through the above characteristics, a dog training device is achieved that allows complete disassembly and storage while occupying the minimum possible space. It also ensures comfortable and ergonomic transport. It also achieves complete adaptability of the device to the needs of each situation, since the number of arms and their dimensions can be adapted.

The dog training device and the set of elements described represent an innovation with structural and constitutive characteristics unknown until now, reasons that, together with its practical utility, provide it with sufficient grounds to obtain the privilege of exclusivity that is requested.

### BRIEF DESCRIPTION OF THE DRAWINGS

To complement the description that is being made and in order to help a better understanding of the characteristics of the invention, a set of drawings is attached as an integral part of said description, in which the following has been represented for illustrative and non-limiting purposes:

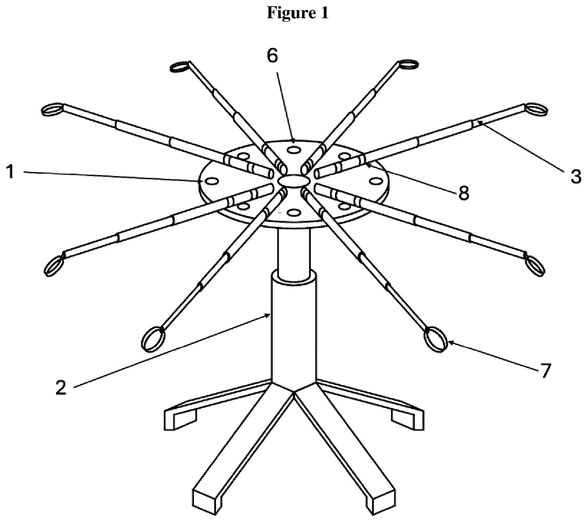

- Figura 1.-: Overview of the invention

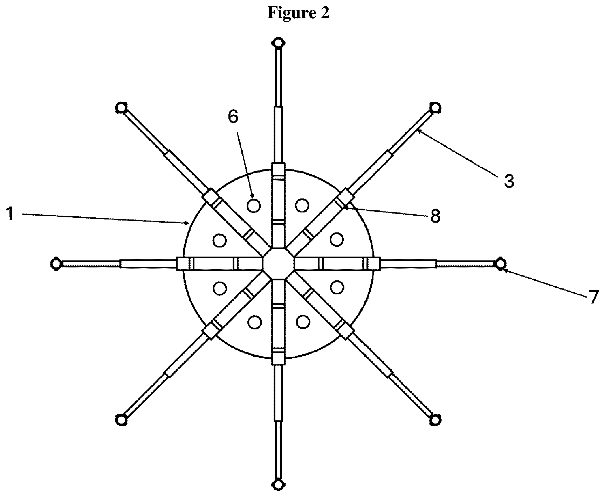

- Figura 2.-: Top view of the invention

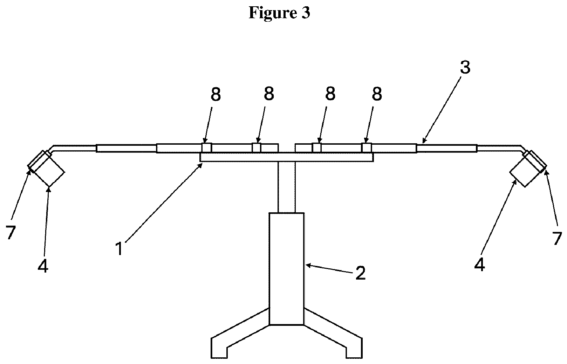

- Figura 3.-: Side view of the invention

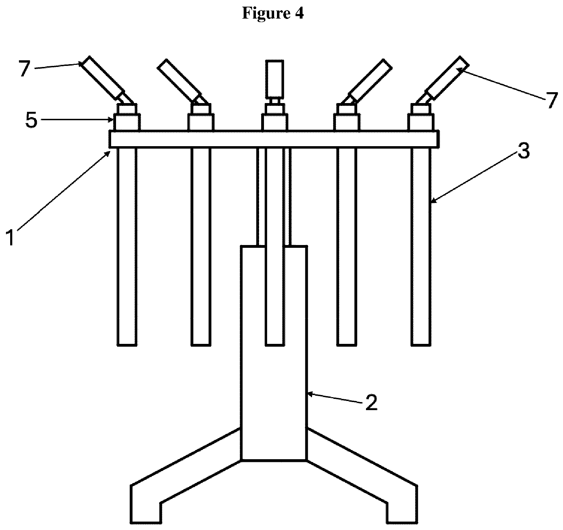

- Figura 4.-: Side view with arms placed in holes.

### List of references and figures:

1. Support
2. Lower structure
3. Arms
4. Containers with olfactory samples
5. Stops
6. Storage Holes
7. Removable means of fixing the containers on the arms
8. Removable means of fixing the arms on the support

### PREFERRED EMBODIMENTS OF THE INVENTION

In the following detailed description of the preferential embodiments, reference is made to the attached drawings that are part of this report, and in which specific preferential embodiments in which the invention can be carried out are shown by way of illustration.

These embodiments are described in sufficient detail to enable the invention to be carried out by experts in the art, and it is understood that other embodiments may be used and that structural, mechanical, electrical and/or chemical logical changes may be made without departing from the scope of the invention. In order to avoid details that are not necessary to enable the experts in the art to carry out the detailed description, it should not, therefore, be taken in a limiting sense.

Specifically, the present invention describes a dog training device comprising a support (1) supported by a lower structure (2), where the support (1) comprises at least one arm (3) placed radially with respect to the centre of the support (1).

The device is characterized by:
- First, the arms (3) are telescopic, which allows their length to be adjusted according to the needs or requirements of the place where the dog training device is to be located. In this way, for small or narrow spaces, the arms (3) will be used in their most compressed configuration, while in open or diaphanous spaces they can be used in their most extended configuration.

- Secondly, each of the arms (3) is attached to the support (1) by means of removable fixing means (8), i.e. the arms (3) must be individually removable, and the number and position of the arms (3) to be used at any given time can be selected, or all the arms (3) can be removed for the storage of the device.
- Thirdly, each of the arms (3) comprises, at the end distal to the support (1), at least one container (4) for the containment of olfactory samples.

In a preferential embodiment, the removable fixing means (8) that attach the arms (3) to the support (1) are at least two clamps located on the support (1), configured to encircle, at least partially, one of the arms (3), keeping it in a horizontal position, parallel to the ground, and following the direction marked by the support (1).

For example, the arms (3) are cylindrical in shape, so that each of the cylindrical arms (3) is held in place by two clip-type clamps of the same diameter as the tubes, providing a firm and secure hold, while allowing quick and easy assembly and disassembly of the arms (3) on the support (1).

In a preferential realization, the support (1) is attached to the lower structure (2) by means of a pivoting joint, allowing the rotation of the support (1) with respect to the lower structure (2), configuring a carousel-shaped movement, so that the arms (3) mounted on the support (1) can rotate around the axis of rotation configured by the pivoting union between the support (1) and the lower structure (2).

Likewise, in another preferential realization, the lower structure (2) includes means of height adjustment of the support (1), preferably a hydraulic system that allows the height at which the support (1) is located to be adapted to the ideal height for the training of the animal, since with the variation of the height of the support (1) the variation of the height of the arms (3) is also achieved and, therefore, of the containers (4) with the olfactory samples.

In a preferential embodiment, the support (1) comprises at least one hole (6) per arm (3), where the holes (6) are shaped like the perimeter of the arms (3), so that, when the arms (3) are not in use, they can be held vertically by placing them in the holes (6).

In addition, to achieve the above objective, the arms (3) comprise a stop (5) larger than the holes (6), such as washers or sleeves, which will act as a stop to prevent the arms (3) from completely passing through the holes, falling through the lower part of the support (1).

In a preferential embodiment, the containers (4) are attached to the arms (3) by removable fixing means (7), which will preferably be a clamp, configured to hold the containers (4) at a certain angle (α) with respect to the vertical, preferably 45°. This allows the animals to glue the truffle together to sniff out the entire top surface of the container (4).

In a preferential embodiment, the containers (4) comprise a lid with a plurality of holes, which allows the scent of the sample to pass outside but prevents the animal from having direct access to the contents of the container (4).

In a preferential realization, the support (1) comprises a central handle, preferably located in the geometric center of the support, so that a uniform distribution of the weights is achieved, allowing a comfortable and ergonomic transport.

In a final preferential realization, the arms (3) are numbered to allow the correct identification of the olfactory samples located inside the containers (4).

Having sufficiently described the nature of the present invention, as well as the manner in which it is put into practice, it is not considered necessary to explain it further in order for any expert in the field to understand its scope and the advantages derived from it, it being stated that, within its essentiality, it may be put into practice in other forms of realization that differ in detail from that indicated by way of example, and to which the protection sought will also be reached, provided that their fundamental principle is not altered, changed or modified.

## Claims

1. **A dog training device** with at least one support (1) supported by a lower structure (2), where the support (1) comprises at least one arm (3) placed radially, **wherein** the arms (3) are telescopic and are attached by removable fixing means (8) to the support (1), where each of the arms (3) comprises at one end at least one container (4) for the containment of olfactory samples.

2. **A dog training device** according to the above claim **wherein** the removable fixing means (8) are at least two clamps located on the support (1), configured to encircle, at least partially, at least one arm (3), and to keep it in a horizontal position.

3. **A dog training device** according to any of the above claims, **wherein** the support (1) is attached to the lower structure (2) by a pivoting joint.

4. **A dog training device** according to the above claim **wherein** the lower structure (2) comprises means of adjusting the height of the support (1).

5. **A dog training device** according to the above claim **wherein the** means of adjusting the height of the support (1) are comprised of a hydraulic system.

6. **A dog training device** according to any of the above claims **wherein** the support (1) comprises at least one hole (6) for each arm (3), where the holes (6) are shaped like the perimeter of the arms (3) and the arms (3) comprise at least one stop (5) larger than the holes (6).

7. **A dog training device** according to any of the above claims, **wherein** the containers (4) are attached to each of the arms (3) by removable fixing means (7).

8. **A dog training device** according to the above claim **wherein the** removable fixing means (7) are configured to hold the containers (4) at a certain angle (α) to the vertical.

9. A **dog training device** according to the above claim **wherein the** angle (α) is 45°.

10. **A dog training device** according to any of the above claims, **wherein** each container **(4)** comprises a lid with a plurality of holes.

11. **A dog training device** according to any of the above claims, **wherein** the support (1) comprises a central handle.

12. **A dog training device** according to the above claim **wherein the** handle is located in the geometric centre of the support (1).

13. **A dog training device** according to any of the above claims, **characterised by** the fact that the arms (3) are numbered.
